# EUROPÄISCHE PATENTSCHRIFT

(11) **EP 0 341 627 B1**
(45) Veröffentlichungstag und Bekanntmachung des Hinweises auf die Patenterteilung: **10.08.1994**
(21) Anmeldenummer: 89108238.0
(22) Anmeldetag: 08.05.1989
(51) Int. Cl.: B67C 3/28, B67C 3/26

(54) **Füllelement**
Filling head
Tête de remplissage

(30) Priorität: 22.03.1989 DE 3909398; 10.05.1988 DE 3815944
(43) Veröffentlichungstag der Anmeldung: 15.11.1989
(73) Patentinhaber: KHS Maschinen- und Anlagenbau Aktiengesellschaft, D-47057 Duisburg (DE)
(72) Erfinder: Ahlers, Egon, Ing.grad., D-6551 Neu-Bamberg (DE)

(56) Entgegenhaltungen:
- EP-A- 0 235 065
- EP-A- 0 254 660
- DE-A- 1 943 503
- FR-A- 1 595 981
- FR-A- 2 111 459

## Beschreibung

Die Erfindung bezieht sich auf ein Füllelement für Maschinen zum Abfüllen von flüssigem Füllgut in Flaschen oder dgl. Gefäße entsprechend dem Oberbegriff des Patentanspruchs 1.

Ein derartiges Füllelement ist aus der DE-A-19 43 503 bekannt. Bei diesem Füllelement sind Verteilelement und Rohrstück fester Bestandteil des Füllelementgehäuses, wobei auf dem Rohrstück der Ventilkörper des Flüssigkeitsventils höhenbeweglich gelagert und das Verteilelement im Flüssigkeitsweg des Füllelements angeordnet ist. Da das Rohrstück fliegend im Füllelementgehäuse angeordnet ist, besteht die Gefahr, daß es beispielsweise durch während des Vorspannvorganges erfolgendes Platzen einer Flasche verbogen wird, so daß das Flüssigkeitsventil nicht mehr richtig schließt und folglich bei Nichtvorhandensein einer Flasche Flüssigkeit aus der sich unterhalb des Flüssigkeitsventils erstreckenden Abgabeöffnung austreten läßt. Flüssigkeitsverluste bei geschlossenem Flüssigkeitsventil sind auch dann aus der Abgabeöffnung möglich, wenn die zwischen dem Ventilkörper und dem Rohrstück vorhandene Abdichtung undicht wird. Auch macht es das Füllelement kompliziert, daß Verteilelement, Rohrstück und Ventilkörper eigenständige Bauteile sind, die in aufwendiger Weise unabhängig voneinander gefertigt werden müssen.

Der Erfindung liegt die Aufgabe zugrunde, ein Füllelement aufzuzeigen, welches bei vereinfachter Konstruktion eine hohe Betriebssicherheit gewährleistet und eine saubere Arbeitsweise ermöglicht.

Zur Lösung dieser Aufgabe ist ein Füllelement entsprechend dem kennzeichnenden Teil des Patentanspruchs 1 ausgebildet.

Durch die Erfindung wird erreicht, daß das die Sonde umschließende Rohrstück beim Öffnen und Schließen des Flüssigkeitsventils mit dem Ventilkörper des Flüssigkeitsventils ebenso mitbewegt wird wie auch das im Flüssigkeitsweg angeordnete Verteilelement, das für diesen Zweck mit seiner Umfangsfläche verschiebbar gegen eine im Gehäuse des Füllelements ausgebildete Gegenfläche anliegt. Das Verteilelement besitzt an seinem Umfangsbereich weiterhin eine zu diesem Umfangsbereich hin offene und mit dem Gaskanal im Rohrstück in Verbindung stehende Ausnehmung, der im Bereich der Gegenfläche deckungsgleich eine Öffnung des im Gehäuse vorgesehenen, zum Gasanschluß führenden Kanals zugeordnet ist.

Durch diese Ausgestaltung, die an sich unabhängig davon ist, ob nun die Sonde beim Öffnen und Schließen des Flüssigkeitsventils mitbewegt wird oder nicht, läßt sich eine besonders einfache und insbesondere auch nur wenige Einzelteile erfordernde Konstruktion für die Ausbildung und Steuerung des Flüssigkeitsventils sowie für den Anschluß des im Rohrstück ausgebildeten Gaskanals erreichen, und zwar bei hoher Betriebssicherheit und sauberer Arbeitsweise.

Dadurch, daß bevorzugt die Sonde beim Öffnen und Schließen des Flüssigkeitsventils bzw. bei der entsprechenden Bewegung des Ventilkörpers mitbewegt wird, ist es grundsätzlich möglich, das Flüssigkeitsventil bzw. dessen Ventilkörper über die Sonde von der das Flüssigkeitsventil steuernden Betätigungseinrichtung zu bewegen, die bei dem erfindungsgemäßen Füllelement bevorzugt eine elektrische Betätigungseinrichtung, beispielsweise eine Magnetanordnung ist. Zumindest mit einer Teillänge dient die Sonde somit gleichzeitig als Betätigungsstößel, um die von der Betätigungseinrichtung veranlaßte Bewegung auf das Flüssigkeitsventil bzw. dessen Ventilkörper zu übertragen, was ebenfalls zur Vereinfachung der konstruktiven Ausbildung des Füllelements beiträgt.

Bei dem erfindungsgemäßen Füllelement ist es in vorteilhafter Weise auch möglich, daß beim Schließen des Flüssigkeitsventils die Sonde mit ihrem unteren Ende bzw. mit ihrem Sondenabschnitt aus dem Spiegel des in einem Gefäß abgefüllten Füllgutes wieder austaucht. In diesem Fall kann die Sonde nach Erreichen der vorbestimmten Füllhöhe und nach dem Schließen des Flüssigkeitsventils ein weiteres Signal liefern, welches sich von dem das Schließen des Flüssigkeitsventils auslösenden Signal unterscheidet. Dieses weitere Signal, welches anzeigt, daß das Flüssigkeitsventil tatsächlich in seine geschlossene Stellung zurückgekehrt ist, kann dann für die unterschiedlichsten Prüf- und Steuerzwecke, beispielsweise zum Einleiten von Inertgas in den vom Füllgut nicht eingenommenen Raum des gefüllten Gefäßes usw. verwendet werden.

Weiterhin läßt sich das erfindungsgemäße Füllelement so ausbilden, daß Sonden unterschiedlichen Typs wahlweise eingesetzt werden können, d.h. das erfindungsgemäße Füllelement läßt sich z.B. ohne Änderung der Konstruktion wahlweise mit einer der eingangs erwähnten bekannten Sonden, insbesondere auch mit einer Leitwertsonde, aber auch mit einer neurartigen optoelektrischen Sonde ausrüsten. Im letzten Fall ist die Sonde ein wenigstens einen Lichtleiter aufweisendes lichtleitendes Element, welches mit seinem einen, dem Sondenabschnitt entfernt liegenden Ende optisch an ein lichtemittierendes Element sowie an einen Lichtdetektor angekoppelt ist. An dem anderen, den Sondenabschnitt bildenden Ende ist das den wenigstens einen Lichtleiter aufweisende lichtleitende Element so ausgebildet, daß dort eine Rückführung eines von dem lichtemittierenden Element ausgehenden und dem Sondenabschnitt zugeführten Lichtstromes an den Lichtdetektor erfolgt, die (Rückführung) von der optischen Dichte des diesen Sondenabschnitt umgebenden Mediums abhängig ist.

Bei einem derartigen Füllelement wird daß das Schließen des Flüssigkeitsventils auslösende Signal, welches entweder darin bestehen kann, daß die verwendete Sonde beim Erreichen der vorbestimmten Füllhöhe ein entsprechendes Steuersignal abgibt oder aber bei Erreichen der vorbestimmten Füllhöhe ein bis dahin an der Sonde oder in einem den Lichtdetektor dieser Sonde einschließenden Stromkreis anliegendes Steuersignal entfällt, dadurch erzeugt, daß im lichtleitenden Element am Sondenabschnitt eine Rückführung des zugeführten Lichtstromes an den Lichtdetektor in der Form erfolgt, daß die an den Lichtdetektor rückgeführte Lichtmenge abhängig ist von der optischen Dichte des den Sondenabschnitt umgebenden Mediums. Diese Rückführung und damit auch das von dem Lichtdetektor gelieferte Signal sind also davon abhängig, ob sich der Sondenabschnitt in einer von Gas bzw. Luft gebildeten Umgebung oder in der von dem flüssigen Füllgut gebildeten Umgebung befindet.

Bei einer möglichen Ausführungsform der Erfindung ist das lichtleitende Element der Sonde von wenigstens einem Lichtleiter gebildet, an welchen sowohl das lichtemittierende Element als auch der Lichtdetektor angekoppelt sind, wobei das den Sondenabschnitt bildende Ende bzw. die dortige Stirnseite dieses Lichtleiters so geformt sind, daß bei in Luft oder in dem gasförmigen Medium befindlichem Sondenabschnitt die Rückführung des Lichtstromes durch Totalreflexion an der Stirnfläche erfolgt, während bei Berührungskontakt des Sondenabschnittes mit dem flüssigen füllgut eine solche Rückführung bzw. Totalreflexion nicht erfolgen.

Bei einer anderen Ausführungsform weist das lichtleitende Element der Sonde wenigstens einen ersten Lichtleiter und wenigstens einen zweiten Lichtleiter auf. Von diesen sind der wenigstens eine erste Lichtleiter an einem dem Sondenabschnitt entfernt liegenden Ende optisch an das lichtemittierende Element und der wenigstens eine zweite Lichtleiter an einem dem Sondenabschnitt ebenfalls entfernt liegenden Ende optisch an den Lichtdetektor angekoppelt. Die Lichtleiter, die mit ihrem jeweils anderen Ende den Sondenabschnitt bilden, sind dort für die Rückführung des Lichtstromes so angeordnet und geformt, daß im Bereich des Sondenabschnittes eine von der optischen Dichte des diesen Sondenabschnitt umgebenden Mediums abhängige Übertragung des über den wenigstens einen ersten Lichtleiter zugeführten Lichtstromes an den zweiten Lichtleiter erfolgt. Bei dieser Ausführungsform der Erfindung ist die Sonde bevorzugt so ausgebildet, daS bei nicht in Berührungskontakt mit dem flüssigen Füllgut stehenden Sondenabschnitt der über den wenigstens einen ersten Lichtleiter zugeführte Lichtstrom zumindest zum Teil durch Totalreflexion in den zweiten Lichtleiter reflektiert wird, während bei in Berührungskontakt mit dem flüssigen Füllgut stehenden Sondenabschnitt diese Totalreflexion wegen des gegenüber Gas oder Luft unterschiedlichen Brechungsindexes nicht stattfindet, sondern der über den wenigstens einen ersten Lichtleiter zugeführte Lichtstrom am Sondenabschnitt aus dieser Sonde austritt. Es sind aber auch Ausführungen denkbar, bei denen die von dem wenigstens einen ersten Lichtleiter an dem wenigstens einen zweiten Lichtleiter im Bereich des Sondenabschnittes übertragene Lichtmenge eine andere Abhängigkeit von dem jeweiligen, den Sondenabschnitt umgebenden Medium aufweist, wenngleich die vorgenannte bevorzugte Ausführung sich durch eine besonders zuverlässige und von der Art des jeweiligen Füllgutes weitestgehend unabhängige Arbeitsweise auszeichnet.

Insgesamt hat das erfindungsgemäße Füllelement mit der opto-elektrischen Sonde den Vorteil, daß für dieses Füllelement bei minimalem konstruktivem Aufwand eine hohe Betriebssicherheit auch bei rauhen Arbeits- und Umgebungsbedingungen erreicht wird, und zwar unabhängig davon, ob es sich bei dem abzufüllenden Füllgut um eine elektrisch leitende oder nichtleitende Flüssigkeit handelt.

Der Sondenabschnitt der opto-elektrischen Sonde ist bevorzugt sich verjüngend, d.h. kegelförmig, abgeschrägt, spitz zulaufend oder prismenartig ausgebildet. Insbesondere auch bei Verwendung von mehreren ersten und zweiten Lichtleitern, die um eine gemeinsame vertikale Achse verteilt angeordnet sind, ist es auch möglich, den Sondenabschnitt kegel- oder kegelstumpfförmig verjüngend auszubilden. Durch die sich verjüngende Ausbildung des Sondenabschnittes wird auch erreicht, daß nach Beendigung eines Füllvorganges sich die Funktion störende Reste des flüssigen Füllgutes an dem Sondenabschnitt nicht halten können.

Weiterbildungen der Erfindung sind Gegenstand der Unteransprüche.

Die Erfindung wird im folgenden anhand der Figuren an Ausführungsbeispielen näher erläutert. Es zeigen:
- Fig. 1: in schematischer Darstellung und im Schnitt eine Ausführungsform eines erfindungsgemäßen Füllelements, zusammen mit einer Zentrierglocke;
- Fig. 2: in vergrößerter Detaildarstellung und im Längsschnitt das untere Ende des Füllrohres bzw. das dortige (geöffnete) Fußventil des Füllelements nach Fig. 1;
- Fig. 3: in ähnlicher Darstellung wie Fig. 1 als weitere Ausführungsform ein füllrohrloses Füllelement gemäß der Erfindung;
- Fig. 4: in schematischer Funktions-Darstellung die Sonde des Füllelements nach Fig. 1;
- Fig. 5 und 6: jeweils in vergrößerter Darstellung und im Schnitt das untere Ende der Sonde vor dem Eintauchen in das flüssige Füllgut (Fig. 5) bzw. nach dem Eintauchen in das flüssige Füllgut (Fig. 6).

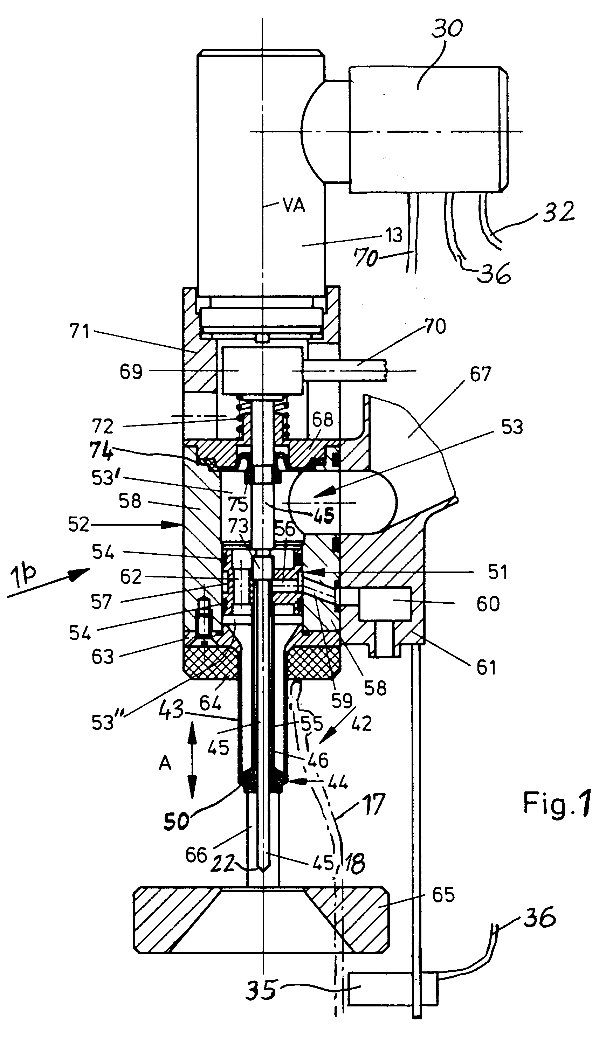

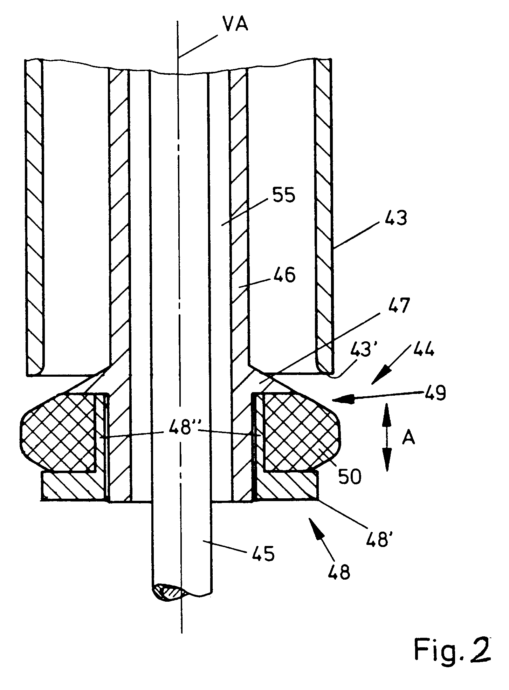

Die Fig. 1 zeigt ein Füllelement 1b, welches sich durch eine besonders einfache, preiswerte und robuste Konstruktion auszeichnet und in bei Behälter- bzw. Flaschenfüllmaschinen üblicher Weise mit mehreren gleichartig ausgebildeten Füllelementen 1 b am Umfang eines um eine vertikale Achse umlaufenden Rotors angeordnet ist, welcher in der Fig. 1 nur sehr schematisch mit dem dortigen Ring oder Rotorteil 61 angedeutet ist. Das Füllelement 1 b besitzt ein mit seiner Achse in einer vertikalen Füllelementachse VA angeordnetes, unten offenes Füllrohr 43, welches ein als Fußventil ausgebildetes Flüssigkeitsventil, nämlich das Flüssigkeitsventil 42 aufweist, das im wesentlichen aus einem das untere Ende des relativ kurzen Füllrohres 43 öffnenden bzw. verschließenden Ventilkörper 44 besteht, der für diesen Zweck zusammen mit der Sonde 45 des Füllelements 1b in der Füllelementachse VA auf- und abbewegbar ist (Doppelpfeil A). Der Ventilkörper 44 sitzt nicht direkt auf der Sonde 45, sondern auf einem diese Sonde umschließenden Rohrstück 46, welches im Bereich seines unteren, offenen Endes, durch das die Sonde 45 nach unten vorsteht, die besonders deutlich die aus der Fig. 2 ersichtliche Ausbildung aufweist. Im Abstand von dem unteren, offenen Ende ist das Rohrstück 46 einstückig mit einem radial über den Umfang dieses Rohrstückes 46 wegstehenden Flansch 47 versehen, der an seiner Oberseite schirmartig schräg nach unten geneigt ausgebildet ist. Unterhalb des Flansches 47 ist das Rohrstück 46 mit einem Außengewinde versehen, auf welches ein Ring 48 mit einem Innengewinde aufgeschraubt ist. Dieser Ring 48 besitzt, wie die Fig. 2 auch zeigt, einen Abschnitt 48' mit größerem Außendurchmesser und einen Abschnitt 48'' mit kleinerem Außendurchmesser. Der Abschnitt 48'' liegt dem Flansch 47 näher als der Abschnitt 48', so daß zwischen der Außenfläche des Abschnittes 48'', der Oberseite des Abschnittes 48' und der Unterseite des Flansches 47 eine am Umfang offene Nut 49 gebildet ist, in der ein Profil-Ring bzw. Dichtungsring 50 angeordnet ist, welcher die mit dem unteren Ende des Füllrohres 43 bzw. mit dem dortigen Öffnungsrand 43' zusammenwirkende Dichtungsfläche des von dem Flansch 47, dem Ring 48 und dem Dichtungsring 50 gebildeten Ventilkörpers 44 bildet.

Das obere Ende des Rohrstückes 46 ist in geeigneter Weise mit einem kolbenartig ausgebildeten Verteilerelement 51 verbunden oder einstückig mit diesem Verteilerelement 51 hergestellt, und zwar derart, daß die Achse des Rohrstückes 46, aber auch die Mittelachse des an seinen Umfang kreiszylinderförmig ausgebildeten Verteilerelementes 51 achsgleich mit der vertikalen Füllelementachse VA liegen. Das Verteilerelement 51 ist in einer in einem Gehäuse 52 des Füllelementes 1b vorgesehenen kreiszylinderförmigen Kammer 53 in Richtung der Füllelementachse VA verschiebbar vorgesehen und weist an seinem Umfang zwei die Füllelementachse VA jeweils konzentrisch umschließende Dichtungselemente 54 auf, die im Abstand übereinander vorgesehen sind und den zwischen der Außenfläche des Verteilerelementes 51 und der Innenfläche der Kammer 53 gebildeten Spalt abdichten.

Der innerhalb des Rohrstückes 46 ausgebildete, die Sonde 45 umschließende Ringkanal 55, der Teil des Rückgasweges ist, reicht bis in das Innere des Verteilerelementes 51 und steht dort mit wenigstens einem radial zur Füllelementachse VA verlaufenden Kanal 56 in Verbindung, der in eine an der Umfangs- bzw. Mantelfläche des Verteilerelementes 51 vorgesehene, zu dieser Umfangsfläche hin offene und die Füllelementachse VA konzentrisch umschließende Verteilernut 57 mündet, die zwischen den beiden Dichtungsringen 54 vorgesehen ist.

In dem die Kammer 53 aufweisenden Teil 58 des Gehäuses 52 ist ein Kanal 59 ausgebildet, der mit seinen einem Ende mit einem Gaskanal, d.h. mit dem Rückgaskanal 60 in Verbindung steht, der in dem die Füllelemente 1b tragenden Teil 61 des um eine vertikale Achse umlaufenden Rotors der Behälter- bzw. Flaschenfüllmaschine ausgebildet ist. Das andere Ende des Kanales 59 endet an der Innenwandung der Kammer 53 dort, wo sich die Verteilernut 57 des Verteilerelementes 51 befindet. Durch entsprechende Breite der Verteilernut 57 ist dafür gesorgt, daß in jeder Stellung des Flüssigkeitsventils 42 und damit in jeder Stellung des mit dem Ventilkörper 44 mitbewegten Verteilerelementes 51 eine Verbindung zwischen dem Kanal 59 und der Verteilernut 57 gewährleistet ist.

Im Verteilerelement 51 ist weiterhin wenigstens ein mit seiner Achse parallel zur Füllelementachse VA liegender Kanal 62 ausgebildet, der an der Oberseite sowie an der Unterseite des Verteilerelementes 51 offen ist und damit den über dem Verteilerelement 51 gebildeten Abschnitt 53' der Kammer 53 mit dem entsprechenden, unterhalb des Verteilerelementes 51 gebildeten Abschnitt 53'' der Kammer 53 verbindet. Es versteht sich, daß die Kanäle 56 und 62 derart gegeneinander versetzt im Verteilerelement 51 vorgesehen sind, daß zwischen diesen Kanälen 56 und 62 keine Verbindung besteht. Letzteres gilt insbesondere auch dann, wenn das Verteilerelement 51 mehrere Kanäle 56 und 62 aufweist.

Das untere Ende des Gehäuseteiles 58 ist durch einen Deckel 63 verschlossen, der in seinem mittleren Bereich einstückig in das Füllrohr 43 übergeht. Auf der Unterseite des Deckels 63 ist ein das Füllrohr 43 umschließendes ringartiges Dichtungselement 64 aus Gummi oder gummiartigem Material vorgesehen, gegen welches bei einer in Dichtlage gegen das Füllelement 1b angehobenen, zu füllenden Flasche 17 diese mit ihrer Mündung dicht anliegt. Eine Zentriertulpe 65 ist vorgesehen, die die übliche Ausbildung und Funktion hat und in üblicher Weise mit Hilfe von Führungsstangen 66 in vertikaler Richtung am Gehäuse 52 des Füllelementes 1b verschiebbar geführt ist.

Der oberhalb des Verteilerelementes 51 gebildete Abschnitt 53' der Kammer 53 steht über eine Öffnung mit einem am Rotor bzw. am Rotorteil 61 vorgesehenen Behälter 67 für das unter Atmosphärendruck stehende flüssige Füllgut in Verbindung.

Die Sonde 45 reicht durch das Verteilerelement 51 nach oben hindurch und ist auch durch einen das Gehäuseteil 58 bzw. die Kammer 53 an ihrem oberen Ende verschließenden Deckel 68 hindurchgeführt und trägt an ihrem oberen, über den Deckel 68 vorstehenden Ende ein Sondengehäuse 69. Über dem Sondengehäuse 69, welches ein zu der elektrischen Steuerung, d. h. beispielsweise zu einer für alle Füllelemente 1b einer Flaschenfüllmaschine gemeinsamen Steuereinrichtung oder zu der Steuereinrichtung 30 führendes Anschlußkabel 70 aufweist, ist mittels einer, beispielsweise aus Kunststoff und vorzugsweise einstückig mit dem Deckel 68 gefertigten Halterung 71 die Magnetanordnung 13 angeordnet, die bei ihrer Aktivierung über das Sondengehäuse 69 die Sonde 45 gegen die Wirkung einer zwischen der Unterseite des Sondengehäuses 69 und der Oberseite des Deckels 68 sitzenden und die Sonde 45 dort konzentrisch umschließenden Druckfeder 72 nach unten verschiebt, wodurch der Dichtungsring 50 des Ventilkörpers 44 von dem unteren Rand 43' des Füllrohres 43 abhebt und dadurch das Flüssigkeitsventil 42 geöffnet wird.

Die Sonde 45 ist bei der dargestellten Ausführungsform mit einem ein Außengewinde aufweisenden Gewindeabschnitt 73 in das Verteilerelement 51 derart eingeschraubt, daß im Bereich dieses Gewindeabschnittes 73 der Ringkanal 55 zur Kammer 53 hin abgedichtet ist. Das Montieren der Sonde 45 an dem Verteilerelement 51 erfolgt bei der dargestellten Ausführungsform des Füllelements 1b speziell in der Weise, daß die Sonde 45 mit ihrem unteren Ende bzw. Sondenabschnitt 45' voraus von oben her in eine sich in das Rohrstück 46 fortsetzende Öffnung des Verteilerelements 51 eingeschoben und schließlich mit dem Gewindeabschnitt 73 in ein im Bereich der vorgenannten Öffnung vorgesehenes Innengewinde des Verteilerelements 51 eingeschraubt wird.

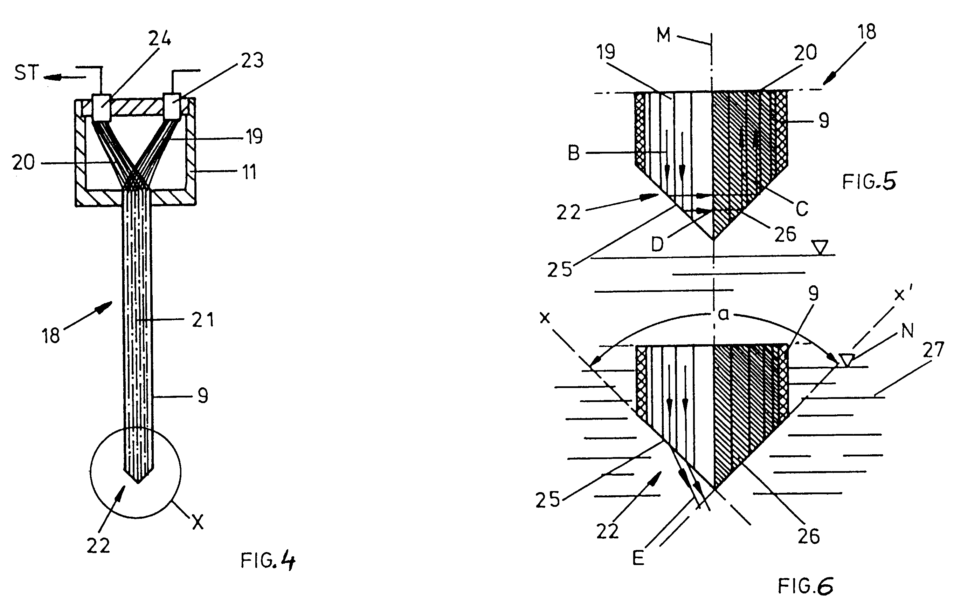

Die Sonde 45 ist im einzelnen in den Figuren 4 - 6 wiedergegeben und besitzt eine von zwei Gruppen von faserförmigen Lichtleitern 19 und 20 gebildete, im wesentlichen stabförmige Lichtleiteranordnung 21, die auf dem größten Teil ihrer Länge ein Rohrstück 9 als äußere Ummantelung aufweist und sich entsprechend dem Rohrstück 9 bei der für die Figuren 1 und 2 gewählten Darstellung von der Unterseite des Sondengehäuses weg erstreckt. Die in dem Rohrstück 9 als Bündel zusammengefaßten Lichtleiter 19 und 20 reichen jeweils von dem Inneren des Sondengehäuses 11 bis an das in den Figuren 1 und 4 untere Ende 22 der Lichtleiteranordnung 21, an welchem (Ende 22) die Lichtleiter 19 und 20 bzw. das von diesen Lichtleitern gebildete Bündel über das untere Ende des Rohrstückes 9 vorstehen.

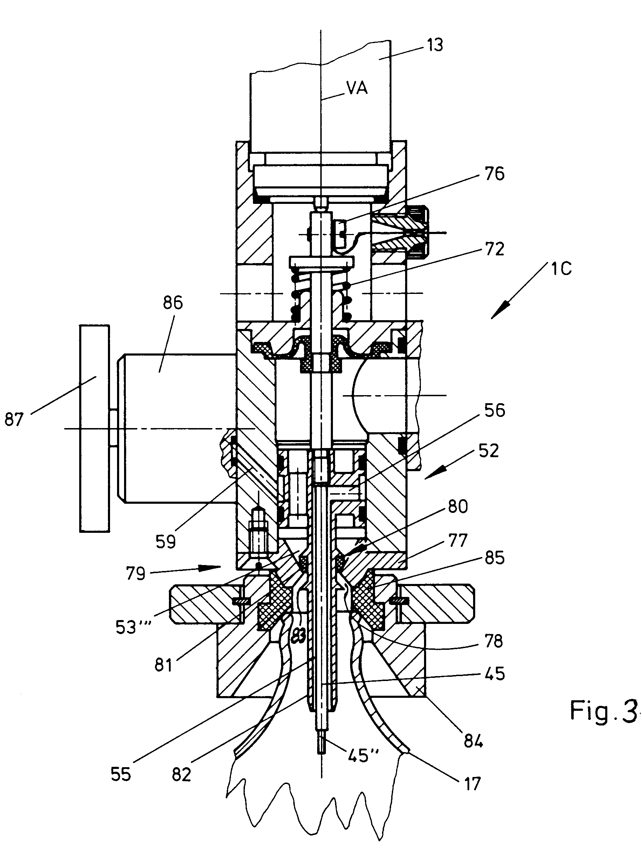

Innerhalb des Sondengehäuses 11 sind die Lichtleiter 19 und 20 derart auseinandergeführt, daß dort die Lichtleiter 19 ein erstes Lichtleiterbündel und die Lichtleiter 20 ein zweites Lichtleiterbündel bilden, wobei die Lichtleiter 19 innerhalb des Sondengehäuses 11 mit ihren dortigen Enden optisch an ein lichtemittierendes Element 23 (z.B. Leuchtdiode, Leuchtdiodenanordnung, Glühlampe, Glühlampenanordnung, usw.) und die Lichtleiter 20 innerhalb des Sondengehäuses 11 mit ihren dortigen Enden an einen Fotoempfänger bzw. an einen Lichtdetektor 24 angeschlossen sind, der innerhalb des Sondengehäuses 11 optisch von dem lichtemittierenden Element 23 getrennt ist und an seinem Ausgang ein elektrisches Steuersignal ST dann liefert, wenn über die Lichtleiter 20 eine genügend große Lichtmenge an den Lichtdetektor 24 zurückgeführt wird. Zur Bildung dieses elektrischen Steuersignals ST weist der Lichtdetektor 24 wenigstens einen Fotowiderstand, eine Fotodiode oder einen Fototransistor oder ein anderes foto-elektrischen Bauelement auf. Das von dem lichtemittierenden Element 23 den Lichtleitern 19 zugeführte Licht kann dem jeweiligen Anwendungsfall entsprechend hinsichtlich seiner Intensität, Wellenlänge bzw. spektralen Zusammensetzung usw. unterschiedlich gewählt sein, wobei es insbes. auch möglich ist, daß das lichtemittierende Element 23 Licht aussendet, welches in einer bestimmten Weise pulsiert oder moduliert ist, um so auszuschließen, daß äußere Einflüsse (äußeres Umgebungs- oder Streulicht) die Arbeitsweise der Sonde 18 beeinträchtigen. Selbstverständlich ist der Lichtdetektor 24 an die Art des von dem lichtemittierenden Element 23 ausgesendeten Lichtes angepaßt. Die Lichtleiter 19 bilden somit die das Licht des lichtemittierenden Elementes 23 an das Ende 22 der Sonde 18 hinleitenden Lichtleiter, wie dies in den Figuren 5 und 6 mit den dortigen Pfeilen B angegeben ist, während die Lichtleiter 20 entsprechend dem Pfeil C der Fig. 5 die das Licht von dem Ende 22 an den Lichtdetektor 24 rückführenden Lichtleiter sind. An dem Ende 22 sind die Lichtleiter 19 und 20 so angeordnet und an ihren dortigen, über die Unterseite des Rohrstückes 9 vorstehenden Enden derart abgeschrägt bzw. mit schrägen Stirnflächen 25 bzw. 26 versehen, daß immer dann, wenn sich das Ende 22 der Sonde 18 in einer Luft- oder Gasatmosphäre befindet, das Licht in jedem Lichtleiter 19 unter Totalreflexion an der am Ende 22 vorgesehenen Stirnfläche 25 zu wenigstens einem Lichtleiter 20 hin umgelenkt wird (Pfeile D der Fig. 5 ), wobei dann dieses reflektierte Licht (Pfeil D) an den am Ende 22 gebildeten Stirnflächen 26 der Lichtleiter 20 unter nochmaliger Totalreflexion in die Lichtleiter 20 umgelenkt wird und so entsprechend den Pfeilen C dem Lichtdetektor 24 zugeführt wird. Bei der dargestellten Ausführungsform sind am Ende 22 die Lichtleiter 19 auf der einen Seite einer vertikalen, die Füllelementachse VA einschließenden Mittelebene M, d.h. auf der linken Seite dieser senkrecht zur Zeichenebene der Figuren 3 und 4 liegenden Mittelebene M, und die Lichtleiter 20 auf der anderen Seite der Mittelebene M angeordnet, wobei jeweils ein Lichtleiter 19 mit seiner Stirnfläche 25 der Stirnfläche 26 eines Lichtleiters 20 bezogen auf die Mittelebene M spiegelbildlich gegenüberliegt. Weiterhin liegen die Stirnflächen 25 sämtlicher Lichtleiter 19 in einer gemeinsamen Ebene X und die Stirnflächen 26 sämtlicher Lichtleiter 20 in einer gemeinsamen Ebene X', wobei die beiden Ebenen X und X' miteinander einen Winkel a und mit der Mittelebene M jeweils einen Winkel 1/2a einschließen und sich diese Winkel zu dem Sondengehäuse 11 hin öffnen. Bei der dargestellten Ausführungsform beträgt der Winkel a etwa 90°. Zumindest im Bereich der Stirnflächen 25 und 26 ist der zwischen den Lichtleitern 19 und 20 verbleibende Raum durch ein lichtdurchlässiges Material (z.B. transparenter oder glasklarer Kunststoff) ausgefüllt, so daß hierdurch einerseits die Lichtleiter 19 und 20 am Ende 22 der Sonde 18 gegenseitig fixiert sind und sich am Ende 22 auch ein dichter, insbes. ein Eintreten von Flüssigkeit verhindernder Abschluß ergibt.

Taucht das Ende 22 der Sonde 18 in eine Flüssigkeit, d.h. in das flüssige Füllgut 27 ein, d.h. kommen das Ende 22 bzw. die Stirnflächen 25 und 26 in Berührungskontakt mit dem flüssigen Füllgut 27, welches einen von Luft oder Gas unterschiedlichen Brechungsindex aufweist, so ist an den Stirnfläche 25 der Lichtleiter 19 eine Totalreflexion nicht mehr möglich, d.h. das über die Lichtleiter 19 zugeführte Licht tritt dann an den Stirnflächen 25 in das flüssige Füllgut 27 ein, wie dies in der Fig.6 mit den dortigen Pfeilen E angedeutet ist, so daß über die Lichtleiter 20 kein Licht oder nur eine äußerst geringe Lichtmenge an den Lichtdetektor 24 zurückgeführt wird, an dessen Ausgang dann das Steuers ignal ST entfällt.

Abweichend von der vorbeschriebenen Ausbildung können insbes. auch die Anordnung oder Verteilung der Lichtleiter 19 und 20 am Ende 22 der Sonde 18 beliebig sein. Wesentlich ist nur, daß immer dann, wenn sich das Ende 22 in einer Gas- oder Luftatmosphäre befindet, in der beschriebenen Weise unter Totalreflexion das über die Lichtleiter 19 zugeführte Licht in die Lichtleiter 20 reflektiert wird, und immer dann, wenn das Ende 22 der Sonde 18 in das flüssige Füllgut 27 eingetaucht ist, das über die Lichtleiter 19 zugeführte Licht nicht oder aber nur ein wesentlich geringerer Teil dieses Lichtes an die Lichtleiter 20 reflektiert wird.

Die Sonde 18 ist mit ihrem im Sondengehäuse 11 untergebrachten aktiven Teil (Element 23 und Lichtdetektor 24) über eine elektrische Mehrfachkupplung 28 und über ein mehradriges Verbindungskabel 29 an eine elektronische Steuer- und Versorgungseinrichtung 30 angeschlossen, die fest an der Magnetanordnung 13 vorgesehen ist, d.h. mit dieser Magnetanordnung eine Baugruppe bildet und die Magnetanordnung 13 steuert. Die Magnetanordnung 13 ist ihrerseits über einen bei der dargestellten Ausführungsform bügelartig ausgebildeten Halter 31 am oberen Ende des Füllrohres 3 befestigt, so daß letztlich das Füllelement 1 mit allen seinen Teilen eine Baueinheit bildet. Zur elektrischen Versorgung ist die Steuereinrichtung 30 über eine Leitung 32 an eine elektrische Strom- bzw. Spannungsversorgung angeschlossen.

Die Sonde 45 kann bei entsprechend starrer bzw. fester Ausbildung der von den Lichtleitern gebildeten Lichtleiteanordnung 21 auf das Rohrstück 9 verzichten, und zwar dann, wenn anstelle dieses Rohrstückes 9 die Lichtleiteanordnung 21 an ihrer Außenfläche lediglich mit einer Schutzschicht versehen ist.

Die Sonde 45 kann aber auch eine andersartig ausgebildete bzw. wirkende Sonde sein, beispielsweise eine Leitfähigkeitssonde, die an einem langgestreckten Sondenkörper wenigstens einen, von einer freiliegenden Elektrode gebildeten Sondenkontakt aufweist. In diesem Fall ist dann anstelle des Sondengehäuses 69 ein Kabelanschluß 76 (Fig. 3) vorgesehen. Je nach Anwendungsfall, Kundenwunsch usw. können das Füllelement 1b bzw. eine derartige Füllelemente aufweisende Behälter- bzw. Flaschenfüllmaschine mit jeweils einer bestimmten Art der Sonde 45 bestückt werden. Hierfür ist eine konstruktive Änderung des Füllelements 1b nicht erforderlich. Vielmehr ist nur die Sonde 45 der jeweils gewünschten, speziellen Art durch Einschrauben in das Verteilertelement 51 am Füllelement 1b zu montieren. Dies setzt natürlich voraus, daß die Sonde 45 einschließlich des Sondengehäuses 69 bzw. des entsprechenden Kabelanschlusses unabhängig von der speziellen Ausbildung zumindest in ihren wesentlichen Abmessungen jeweils gleich ist.

Um den Abschnitt 53' auch im Bereich der Durchtrittsstelle der Sonde 45 durch den Deckel 68 dicht abzuschließen, ist an der Unterseite des Deckels 68 eine Membran-Dichtung 74 vorgesehen, die an ihrem Umfang zwischen dem Gehäuseteil 58 und dem Deckel 68 eingespannt ist und im Bereich einer mittleren Öffnung bzw. im Bereich eines dort gebildeten Membran-Randes 75 die Sonde 45 dicht umschließt.

Zum Füllen der Flasche 17 wird diese in üblicher Weise durch ein nicht dargestelltes Hubelement der Füllmaschine von unten her an das Füllelement 1b angehoben, und zwar bei der dargestellten Ausführungsform in der Form, daß die Flasche 17 mit dem die Flaschenöffnung umschließenden Rand 17' gegen das Dichtungselement 64 zur Einnahme der Dichtlage angehoben werden.

Ist eine im Beispiel der Fig. 1 strichpunktiert angedeutete Flasche 17 an das Füllelement 1b angesetzt, so erhält die Steuereinrichtung 30 von einem zusätzlichen Sensor 35, der an der Unterseite des Rotorteils 61 in der Nähe der zu füllenden Flasche 17 vorgesehen und beispielsweise als opto-elektrischer Sensor ausgebildet ist, über eine Leitung 36 ein Signal, welches die ordnungsgemäße Positionierung einer Flasche 17 unter dem betreffenden Füllelement 1b anzeigt und entweder selbst oder in Verbindung mit einem weiteren, vorzugsweise von der Stellung des Rotors abhängigen Signals den Füllvorgang einleitet. Hierfür wird von der Steuereinrichtung 30 die Magnetanordnung 13 aktiviert, so daß diese das Rohrstück 46 gegen die Wirkung der Feder 72 nach unten bewegt und dadurch das Flüssigkeitsventil 44 öffnet. Das flüssige Füllgut 27 kann dann über das Flüssigkeitsventil 44 der zu füllenden Flasche zufließen, wobei das beim Füllen aus der Flasche 17 verdrängte Luft- oder Gasvolumen über den Ringkanal 55, den Kanal 56 und den Kanal 59 in den Rückgaskanal 60 entweichen kann. Ist der Spiegel des flüssigen Füllgutes 27 in der zu füllenden Flasche 17 soweit aufgestiegen, daß das untere Ende 22 der Sonde 18 in Berührungskontakt mit dem in der Flasche 17 aufsteigenden Füllgut 27 kommt (Fig. 6), d. h. ist in der Flasche 17 ein Füllstand mit einem Niveau N erreicht, bei dem das Ende 22 in das flüssige Füllgut 27 eingetaucht ist, entfällt an dem Lichtdetektor 24 der Sonde 18 in der vorbeschriebenen Weise das elektrische Steuersignal ST, welches über die Leitung 70 der Steuereinrichtung 30 zugeführt wurde, so daß diese dann die Magnetanordnung 13 in den nichtaktivierten Zustand überführt und durch die Feder 72 das Flüssigkeitsventil 44 geschlossen wird. Da das Ende 22 der Sonde 18 beim Schließen des Flüssigkeitsventiles 44 ebenfalls nach oben bewegt wird und somit dieses Ende wieder aus dem in der Flasche 17 vorhandenen Füllgut 27 austreten kann, wobei die Sonde 18 dann erneut das Steuersignal ST liefert, ist durch entsprechende Ausbildung der Steuereinrichtung 30 dafür gesorgt, daß ein erneutes Aktivieren der Magnetanordnung 13 auch dann nicht erfolgt, wenn nach dem Schließen des Flüssigkeitsventiles 44 erneut ein Steuersignal ST anliegt.

Dieses nach dem Schließen des Flüssigkeitsventiles 44 erneut anliegende Steuersignal ST kann für Prüfzwecke (z. B. Überprüfung der ordnungsgemäßen Arbeitsweise der Sonde 18), aber auch für Steuerzwecke, z. B. zum Einleiten von Inertgas in die gefüllte Flasche 17 usw. verwendet werden.

Bei dem Füllelement 1b ist der Füllstand bzw. das Niveau N, bei welchem das Schließen des Flüssigkeitsventils 44 erfolgt, durch entsprechende Justierung des Füllrohres 43 und der an diesem Füllrohr vorhandenen Elemente (Doppelpfeil A) einstellbar.

Die Fig. 3 zeigt in ähnlicher Darstellung wie die Fig. 1 als weitere mögliche Ausführungsform der Erfindung ein Füllelement 1c, welches als Gegendruck-Füllelement ausgebildet ist und sich von dem Füllelement 1b im wesentlichen nur durch die nachfolgend angegebenen Maßnahmen unterscheidet, ansonsten jedoch mit dem Füllelement 1b konstruktiv übereinstimmt, so daß solche Elemente des Füllelementes 1c, die von ihrer Ausbildung und Funktion her den bereits vorbeschriebenen Elementen des Füllelementes 1b entsprechen, auch in der Fig. 3 wieder mit den gleichen Bezugsziffern wie in der Fig. 1 bezeichnet sind.

Ein Unterschied zu dem Füllelement 1b besteht zunächst darin, daß bei dem Füllelement 1c die Sonde 45 als Leitfähigkeitssonde ausgebildet ist, an ihrem unteren Ende einen Sondenabschnitt 45'' in Form einer freiliegenden Elektrode sowie am oberen Ende den Kabelanschluß 76 aufweist.

Der wesentliche Unterschied zum Füllelement 1b besteht aber darin, daß das Füllelement 1c als füllrohrloses Füllelement ausgebildet ist, d.h. der das Gehäuse 52 des Füllelementes 1c an seiner Unterseite abschließende und dem Deckel 63 entsprechende Deckel 77 weist in seinem mittleren Bereich die mit ihrer Mittelachse achsgleich mit der Füllelementachse VA liegende und von einem kurzen Ringkanal 78 gebildete Abgabeöffnung auf, in deren Bereich das Flüssigkeitsventil 79 vorgesehen ist. Des Flüssigkeitsventil wird bei dieser Ausführungsform von einem Ventilkörper 80 gebildet, der ähnlich dem Ventilkörper 44 ausgeführt ist und einen Dichtungsring 81 aufweist, mit welchem bei geschlossenem Flüssigkeitsventil 79 der Ventilkörper 80 gegen die Innenfläche des sich nach unten hin trichterartig verengenden und bei geöffnetem Flüssigkeitsventil 79 an der Unterseite über den Ringkanal 78 offenen Abschnitt 53''' der Kammer 53 anliegt, welcher (Abschnitt) in dem Deckel 77 ausgebildet ist. Der Ventilkörper 80 sitzt auf einem Rohrstück 82, welches dem Rohrstück 46 des Füllelementes 1b insofern entspricht, als auch das Rohrstück 82 am Verteilerelement 51 vorgesehen ist und über die Unterseite dieses Verteilerelementes wegsteht und den die Sonde 45 umschließenden Ringkanal 55 bildet, der am unteren Ende der Sonde 45, d.h. am Sondenabschnitt 45'' offen ist und im Inneren des Verteilerelementes 51 in den dortigen, radial zur Füllelementachse VA verlaufenden Kanal 56 mündet. Bei dem Füllelement 1 wird das Flüssigkeitsventil nach dem Abschalten der Magnetanordnung 13 durch die Wirkung der Druckfeder 72 geöffnet. Zum Schließen des Flüssigkeitsventiles wird die Magnetanordnung 13 aktiviert.

Um bei geöffnetem Flüssigkeitsventil 79 ein unmittelbares Herabfließen des flüssiges Füllgutes an der Außenfläche des Rohrstückes 82 zu vermeiden, d.h. um dem flüssigen Füllgut nach dem Passieren des geöffneten Flüssigkeitsventils eine Strömungskomponente aufzuprägen, die in bezug auf die Füllelementachse VA radial nach außen gerichtet ist, ist auf dem Rohrstück 82 unterhalb des Ventilkörpers 80 und im Bereich des Ringkanales 78 ein schirmartiger Flansch 83 vorgesehen, der über die Umfangsfläche des Rohrstückes 82 wegsteht und an seiner Oberseite eine Kegelfläche aufweist.

Anstelle des Dichtungselementes 64 ist bei dieser Ausführungsform ein an der Zentriertulpe 84 vorgesehenes Dichtungselement 85 verwendet, gegen welches beim Füllen der Flasche 17 diese mit ihrer Mündung von unten her abgedichtet angepreßt ist und welches mit seiner Oberseite dicht gegen die Unterseite des Deckels 77 anliegt. Das Flüssigkeitsventil 79 ist ebenfalls ein "Fußventil", da das Flüssigkeitsventil 79 unmittelbar an der Abgabeöffnung bzw. an dem Ringkanal 78 in der Form vorgesehen ist, daß bei geschlossenem Flüssigkeitsventil 79 im Flüssigkeitsweg für das flüssige Füllgut stromab dem Flüssigkeitsventil 79 im wesentlichen kein Flüssigkeitskanal vorhanden ist. Dies gilt insbes. auch deswegen, weil die axiale Länge des Ringkanals 78, d.h. die Länge dieses Kanals (in Richtung der Füllelementachse VA) kleiner ist als der maximale Außendurchmesser des Ringkanals 78 an seinem untersten Ende.

Bei dem Füllelement 1c ist der Kanal 59 nicht mit dem ins Freie führenden Rückgaskanal 60 verbunden, sondern mit einer, z.B. eine Schieberscheibe aufweisenden Umschaltventileinrichtung 86, die beispielsweise die bei Gegendruckfüllelementen übliche Ausbildung aufweist und mittels eines Stellelementes 87 mechanisch durch nicht näher dargestellte Steuerkurven gesteuert wird, so daß der von dem Rohrstück 82 gebildete Ringkanal 55 nicht nur als Spanngaskanal zum Vorspannen der Flasche 17 sowie als Rückgaskanal beim eigentlichen Füllen der Flasche 17, sondern auch als Spülgaskanal zum Spülen der Flasche 17 mit einem Inertgas, vorzugsweise mit CO₂ dienen kann, und zwar in einer dem Vorspannen der Flasche 17 vorausgehenden Spülphase, in der die Flasche 17 mit ihrer Mündung nicht in Dichtlage gegen das Dichtungselement 85 anliegt, sondern einen Abstand von diesem Dichtungselement 85 aufweist. Über dem Ringkanal 55 und dem Kanal 59 erfolgt auch in geeigneter Stellung des Stellelements 87 die den Füllvorgang abschließende Entlastung der jeweiligen Flasche 17 auf Atmosphärendruck.

Auf den zusätzlichen, das Vorhandensein einer zu füllenden Flasche 17 prüfenden Sensor 35 kann bei den Füllelementen 1b bzw. 1c auch verzichtet werden. In diesem Fall sind dann an der Füllmaschine andere Mittel vorgesehen, die dafür sorgen, daß das Flüssigkeitsventil 44 bzw. 80 eines Füllelements 1b bzw. 1c erst dann geöffnet wird, wenn sich unter diesem Füllelement tatsächlich auch eine zu füllende Flasche 17 befindet. Die Steuereinrichtungen 30 der einzelnen Füllelemente 1b bzw. 1c sind dann über die Leitungen 36 mit diesen Mitteln steuerungsmäßig verbunden, die beispielsweise von einem an der Bewegungsbahn des umlaufenden Rotors fest vorgesehenen Sensor oder aber dadurch gebildet sind, daß im Bereich des Flascheneinlaufs der betreffenden Füllmaschine eine Meß- oder Sensoranordnung vorgesehen ist, die eventuelle Lücken in dem der Füllmaschine zugeführten Flaschenstrom registriert.

## Patentansprüche

1. Füllelement für Füllmaschinen zum Abfüllen eines flüssigen Füllgutes in Flaschen (17) mit einem Flüssigkeitsventil (42, 79), welches einen zwischen einer das Flüssigkeitsventil sperrenden und einer das Flüssigkeitsventil öffnenden Stellung in einer Füllventilachse (VA) hin- und herbewegbaren Ventilkörper (44, 80) aufweist, der in der Nähe einer Abgabeöffnung vorgesehen ist, über die bei geöffnetem Flüssigkeitsventil (42, 79) das flüssige Füllgut der zu füllenden Flasche (17) über deren Flaschenöffnung zufließt, mit einer das Flüssigkeitsventil (42, 79) steuernden Sonde (18, 45), die an einem über die Abgabeöffnung in Richtung der Füllelementachse vorstehenden Ende einen Sondenabschnitt bildet, mit dem die Sonde (18, 45) in die jeweils zu füllende Flasche (17) durch die Flaschenöffnung hineinreicht und mit dem die Sonde bei Erreichen einer vorbestimmten Füllhöhe in der zu füllenden Flasche anspricht, um ein das Schließen des Flüssigkeitsventils (42, 79) auslösendes Signal abzugeben, mit einem die Sonde (18, 45) zumindest auf einer Teillänge umschließenden Rohrstück (46, 82), in welchem ein Kanal (55) ausgebildet ist, sowie mit einem im Flüssigkeitsweg des Füllelementes angeordneten Verteilerelement (51), an welchem sich das Rohrstück (46, 82) mit seinem dem Sondenabschnitt entfernt liegenden Ende anschließt und in welchem sich der Kanal (55) fortsetzt, wobei im Gehäuse (52) des Füllelementes (1b, 1c) ein über das Verteilerelement (51) mit dem Kanal (55) im Rohrstück (46, 82) in Verbindung stehender Kanal (59) vorgesehen ist, der mit einem Gaskanal (60) oder mit einer Steuerventileinrichtung (86) des Füllelementes verbunden ist, **dadurch gekennzeichnet**, daß das Rohrstück (46, 82) und das Verteilerelement (51) beim Öffnen und Schließen des Flüssigkeitsventils (42, 79) mit dem Ventilkörper (44, 80) mitbewegt werden, daß das Verteilerelement (51) einen gegenüber der Umfangsfläche des Rohrstückes (46, 82) bezogen auf die Füllelementachse (VA) radial nach außen versetzten Umfangsbereich aufweist, mit welchem das Verteilerelement (51) dicht und in Richtung der Füllelementachse (VA) verschiebbar gegen eine in dem Gehäuse (52) des Füllelementes (1b, 1c) ausgebildete Gegenfläche anliegt, daß das Verteilerelement (51) an dem Umfangsbereich eine zu diesem Umfangsbereich hin offene und mit dem Kanal (55) in Verbindung stehende Ausnehmung (57) aufweist, daß an der Gegenfläche im Bereich der Ausnehmung (57) eine Öffnung des im Gehäuse ausgebildeten Kanals (59) vorgesehen ist, und daß die Sonde (18, 45) mit dem Ventilkörper (44, 80) beim Öffnen und Schließen des Flüssigkeitsventils (42, 79) mitbewegt wird.

2. Füllelement nach Anspruch 1, dadurch gekennzeichnet, daß die Abgabeöffnung am unteren Ende eines über die Unterseite des Füllelementes (1c) wegstehenden Füllrohres (43) gebildet ist, und daß der Ventilkörper (44) im Bereich des unteren Endes des Füllrohres (43) vorgesehen ist, wobei sich der Ventilkörper (44) zumindest bei geöffnetem Flüssigkeitsventil (42) unterhalb der Abgabeöffnung befindet.

3. Füllelement nach Anspruch 1, dadurch gekennzeichnet, daß bei füllrohrloser Ausbildung des Füllelementes (1c) die Abgabeöffnung (78) an der Unterseite eines Gehäuses (52) ausgebildet ist, und daß die Sonde (45) aus der Abgabeöffnung (78) über die Unterseite des Füllelementes (1c) vorsteht.

4. Füllelement nach Anspruch 3, dadurch gekennzeichnet, daß der Ventilkörper (80) in einem in dem Gehäuse (52) ausgebildeten Flüssigkeitskanal (53) für das Füllgut unmittelbar über der Abgabeöffnung (78) vorgesehen ist.

5. Füllelement nach Anspruch 3 oder 4, dadurch gekennzeichnet, daß die Abgabeöffnung ein um die Sonde (45) ausgebildeter, an seinem unteren Ende offener Ringkanal (78) ist, daß der Ventilkörper (80) im Bereich des oberen Endes dieses Ringkanales (78) vorgesehen ist, und daß der an seiner Außenfläche vorzugsweise kegelförmig ausgebildete Ringkanal (78) eine axiale Länge besitzt, die kleiner ist als der Außendurchmesser, den der Ringkanal (78) an seinem unteren, offenen Ende aufweist.

6. Füllelement nach einem der Ansprüche 1 bis 5, gekennzeichnet durch eine für das Flüssigkeitsventil (42, 79) vorgesehene Betätigungseinrichtung (13), die auf die Sonde (45) einwirkt und über diese Sonde (45) den Ventilkörper (44, 80) des Flüssigkeitsventils (42, 79) betätigt.

7. Füllelement nach einem der Ansprüche 1 - 6, dadurch gekennzeichnet, daß die Sonde (18, 45) beim Öffnen und Schließen des Flüssigkeitsventils (42, 79) mitbewegt wird.

8. Füllelement nach einem der Ansprüche 1 - 7, dadurch gekennzeichnet, daß der Ventilkörper auf der Sonde angeordnet ist.

9. Füllelement nach einem der Ansprüche 1 - 7, dadurch gekennzeichnet, daß der Ventilkörper (44, 80) auf dem die Sonde (45) zumindest auf einer Teillänge umschließenden Rohrstück (46, 82) angeordnet bzw. ausgebildet ist.

10. Füllelement nach einem der Ansprüche 1 bis 9, dadurch gekennzeichnet, daß das vorzugsweise an seiner Umfangsfläche kreiszylinderförmig ausgebildete Verteilerelement (51) in einer an seinen Außenquerschnitt angepaßten und in dem Gehäuse (52) des Füllelementes (1b) ausgebildeten Kammer (53) in Richtung der Füllelementachse (VA) verschiebbar vorgesehen ist.

11. Füllelement nach einem der Ansprüche 1 bis 10, dadurch gekennzeichnet, daß sich die im Verteilerelement (51) vorzugsweise durch Einschrauben befestigte Sonde (45) über die dem Sondenabschnitt (45') abgewandte Seite des Verteilerelementes (51) fortsetzt und an ihrem dem Sondenabschnitt entfernt liegenden Ende mit der Betätigungseinrichtung (13) für das Flüssigkeitsventil (42, 79) zusammenwirkt.

12. Füllelement nach einem der Ansprüche 1 bis 11, dadurch gekennzeichnet, daß die im Gehäuse (52) des Füllelementes (1b, 1c) gebildete Kammer (53) einen oberhalb des Verteilerelementes (51) liegenden Abschnitt (53'), der mit einem Zuführungskanal oder mit einem Vorratsbehälter (67) für das flüssige Füllgut in Verbindung steht, und einen unterhalb des Verteilerelementes (51) liegenden Abschnitt (53'') aufweist, der bei geöffnetem Flüssigkeitsventil (42, 79) mit der geöffneten Abgabeöffnung in Verbindung steht, und daß im Verteilerelement (51) wenigstens ein die beiden Abschnitte (53', 53'') der Kammer (53) verbindender Verbindungskanal (62) vorgesehen ist.

13. Füllelement nach einem der Ansprüche 1 bis 12, dadurch gekennzeichnet, daß die Sonde (45) im Bereich ihres dem Sondenabschnitt (45') entfernt liegenden Endes aus einem in einem Gehäuse (52) des Füllelementes (1b, 1c) gebildeten Kammer (53) für das flüssige Füllgut durch eine Wandung, beispielsweise durch einen Deckel (68) des Gehäuses (52) hindurchgeführt ist, und zwar unter Verwendung einer dort vorgesehenen Membran-Dichtung (74).

14. Füllelement nach einem der Ansprüche 1 bis 13, dadurch gekennzeichnet, daß die Sonde (45) eine Leitwertsonde mit wenigstens einem am Sondenabschnitt (45'')vorgesehenen Sondenkontakt ist.

15. Füllelement nach einem der Ansprüche 1 bis 13, dadurch gekennzeichnet, daß die Sonde (18), die mit ihren Sondenabschnitt bei Erreichen einer vorbestimmten Füllhöhe in der zu füllenden Flasche (17) in Berührungskontakt mit den Spiegel des beim Füllen in der Flasche (17) aufsteigenden Füllgutes (27) kommt, ein wenigstens einen Lichtleiter aufweisendes lichtleitendes Element ist, welches mit seinem einen dem Sondenabschnitt entfernt liegenden Ende optisch an ein lichtemittierendes Element (23) sowie an einen Lichtdetektor (24) angekoppelt und an seinem anderen den Sondenabschnitt (22) bildenden Ende so ausgebildet ist, daß dort eine von der optischen Dichte des diesen Sondenabschnitt (22) umgebenden Mediums abhängige Rückführung eines von dem lichtemittierenden Element (23) ausgehenden und dem Sondenabschnitt (22) zugeführten Lichtstromes an den Lichtdetektor (24) erfolgt.

16. Füllelement nach Anspruch 15, dadurch gekennzeichnet, daß das lichtleitende Element der Sonde (18) von wenigstens einem ersten Lichtleiter (19) und von wenigstens einem zweiten Lichtleiter (20) gebildet ist, von denen der wenigstens eine erste Lichtleiter (19) an einem dem Sondenabschnitt (22) entfernt liegenden Ende das lichtemittierendes Element (23) und der wenigstens eine zweite Lichtleiter (20) an einem dem Sondenabschnitt (22) entfernt liegenden Ende an den Lichtdetektor (24) angekoppelt sind, und daß die Lichtleiter (19, 20), die mit ihrem jeweils anderen Ende den Sondenabschnitt (22) bilden, dort so angeordnet und geformt sind, daß für die Rückführung des Lichtstromes eine von der optischen Dichte des den Sondenabschnitt (22) umgebenden Mediums abhängige Übertragung des über den wenigstens einen ersten Lichtleiter (19) zugeführten Lichtstromes an den zweiten Lichtleiter (20) erfolgt.

17. Füllelement nach Anspruch 15 oder 16, dadurch gekennzeichnet, daß das lichtleitende Element an seinem den Sondenabschnitt (22) bildenden anderen Ende derart ausgeführt ist, daß dort bei Anordnung des Sondenabschnittes (22) in Luft oder in einem gasförmigen Medium die Rückführung oder Übertragung durch Totalreflexion erfolgt und bei Berührungskontakt des Sondenabschnittes (22) mit dem flüssigen Füllgut (27) eine solche Rückführung oder Übertragung nicht erfolgt.

18. Füllelement nach Anspruch 17, dadurch gekennzeichnet, daß das lichtemittierende Element und der Lichtdetektor an einen gemeinsamen Lichtleiter angekoppelt sind und dieser gemeinsame Lichtleiter am Sondenabschnitt eine spitz zulaufende, vorzugsweise kegelartige oder kegelförmige Stirnfläche aufweist,
oder daß der wenigstens eine erste Lichtleiter (19) und/oder der wenigstens eine zweite Lichtleiter (20) am anderen Ende eine schräge Stirnfläche (25, 26) aufweisen, die mit der dortigen Achse (Lichtleiterachse) des zugehörigen Lichtleiters (19, 20) einen Winkel derart einschließt, daß bei der Anordnung des Sondenabschnittes (22) in Luft oder in einem gasförmigen Medium die Übertragung des über den wenigstens einen ersten Lichtleiter (19) zugeführten Lichtstromes an den wenigstens einen zweiten Lichtleiter (20) durch Totalreflexion an dieser Stirnfläche (25, 26) erfolgt.

19. Füllelement nach Anspruch 18, dadurch gekennzeichnet, daß sowohl der wenigstens eine erste Lichtleiter (19), als auch der wenigstens eine zweite Lichtleiter (20) am anderen Ende jeweils die schräge Stirnfläche (25, 26) aufweisen, und daß die schräge Stirnfläche sowohl des wenigstens einen ersten Lichtleiters (19) sowie des wenigstens einen zweiten Lichtleiters (20) relativ zueinander sowie bezogen auf die jeweilige Lichtleiterachse derart angeordnet sind, daß bei in Luft oder in dem gasförmigen Medium befindlichem Sondenabschnitt (22) die Übertragung des über den wenigstens einen ersten Lichtleiter (19) zugeführten Lichtstromes an den wenigstens einen zweiten Lichtleiter (20) durch zweimalige Totalreflexion an den schrägen Stirnflächen dieser Lichtleiter (19, 20) erfolgt.

20. Füllelement nach Anspruch 19, dadurch gekennzeichnet, daß der wenigstens eine erste Lichtleiter (19) sowie der wenigstens eine zweite Lichtleiter (20) mit ihren schrägen Stirnflächen (25, 26) sich zumindest teilweise spiegelsymmetrisch auf unterschiedlichen Seiten einer Mittelebene M gegenüberliegen, die parallel zu der Lichtleiterachse der Lichtleiter (19, 20) verläuft, und daß die schrägen Stirnflächen (25, 26) der Lichtleiter (19, 20) in einer ersten bzw. zweiten Ebene (X, X') liegen, die die Mittelebene (M) an einer quer bzw. senkrecht zur Lichtleiterachse verlaufenden gemeinsamen Achse schneiden und mit der Mittelebene (M) jeweils einen sich zur Unterseite des Füllelementes (1, 1a, 1b) öffnenden spitzen Winkel (a/2) einschließen.

21. Füllelement nach einem der Ansprüche 16 bis 20, dadurch gekennzeichnet, daß jeweils mehrere erste und zweite Lichtleiter (19, 20) vorgesehen sind, daß die Lichtleiter (19, 20) mehrere, jeweils wenigstens einen ersten Lichtleiter (19) und wenigstens einen zweiten Lichtleiter (20) aufweisende Gruppen bilden, und daß sich die Lichtleiter (19, 20) jeder Gruppe mit ihren schrägen Stirnflächen (25, 26) auf verschiedenen Seiten einer für jede Gruppe vorgesehenen Mittelebene (M) in bezug auf diese Mittelebene (M) spiegelbildlich gegenüberliegen.

22. Füllelement nach einem der Ansprüche 16 bis 20, dadurch gekennzeichnet, daß jeweils mehrere erste und zweite Lichtleiter (19, 20) vorgesehen sind, daß sich die schrägen Stirnflächen (25, 26) wenigstens eines Teils der ersten und zweiten Lichtleiter (19, 20) auf verschiedenen Seiten einer gemeinsamen Mittelebene (M) in bezug auf diese Mittelebene (M) spiegelbildlich gegenüberliegen, wobei vorzugsweise die auf einer Seite der Mittelebene (M) angeordneten Stirnflächen (25) in der ersten Ebene (X) und die auf der anderen Seite der Mittelebene (M) angeordneten Stirnflächen (26) in der zweiten Ebene (X') angeordnet sind.

23. Füllelement nach Anspruch 22, dadurch gekennzeichnet, daß sämtliche erste Lichtleiter (19) mit ihren Schrägflächen (25) auf der einen Seite der Mittelebene (M) und sämtliche zweite Lichtleiter (20) mit ihren Stirnflächen (26) auf der anderen Seite der Mittelebene (M) angeordnet sind,
oder daß auf beiden Seiten der Mittelebene (M) sowohl erste als auch zweite Lichtleiter (19, 20) mit ihren Stirnflächen (25, 26) angeordnet sind.

24. Füllelement nach einem der Ansprüche 20 bis 23, dadurch gekennzeichnet, daß die schräge Stirnfläche (25, 26) des wenigstens einen ersten Lichtleiters (19) und/oder des wenigstens einen zweiten Lichtleiters (20) mit der Lichtleiterachse am Sondenabschnitt (22) einen spitzen, sich zur Unterseite des Füllelementes (1b) hin öffnenden Winkel (a/2), vorzugsweise einen Winkel von etwa 45° einschließt.

25. Füllelement nach einem der Ansprüche 15 bis 24, dadurch gekennzeichnet, daß der wenigstens eine, das lichtleitende Element bildende Lichtleiter (19, 20) in einer rohrförmigen Ummantelung, vorzugsweise in einem Rohrstück (9) untergebracht ist und am Sondenabschnitt (22) aus der Ummantelung bzw. dem Rohrstück (9) vorsteht.

26. Füllelement nach einem der Ansprüche 1 bis 21, dadurch gekennzeichnet, daß das Füllelement (1b, 1c) im Bereich der Abgabeöffnung (78) so ausgebildet ist, daß dem bei geöffnetem Flüssigkeitsventil (42, 79) aus der Abgabeöffnung (78) austretenden Strom des flüssigen Füllgutes (27) eine bezogen auf die Füllelementachse (VA) radial nach außen wirkende Strömungskomponente aufgezwungen wird.

27. Füllelement nach Anspruch 26, dadurch gekennzeichnet, daß das Füllrohr (43) als Abgabeöffnung mehrere, in der Wandung des Füllrohres um die Füllelementachse (VA) verteilt vorgesehenen Einzelöffnungen aufweist oder eine die Füllelementachse (VA) umschließende ringförmige Abgabeöffnung besitzt.

28. Füllelement nach einem der Ansprüche 1 bis 27, dadurch gekennzeichnet, daß über dem Sondenabschnitt (45', 45'') ein schirmartig wirkendes, das flüssige Füllgut (27) aus dem Bereich des Sondenabschnittes (45', 45'') wegleitendes Element (47, 83) vorgesehen ist.

29. Füllelement nach einem der Ansprüche 1 bis 28, dadurch gekennzeichnet, daß die Sonde (18, 45) an eine elektrische Steuereinrichtung (30) angeschlossen ist, die zur Ansteuerung einer Betätigungseinrichtung (13) für das Flüssigkeitsventil (42, 79) dient, und daß die Steuereinrichtung (30) und die Betätigungseinrichtung (13) eine Baugruppe bilden.

30. Füllelement nach einem der Ansprüche 1 bis 29, dadurch gekennzeichnet, daß die Sonde (18) bzw. deren Sondenabschnitt (22) in vertikaler Richtung (A) einstellbar an der Füllmaschine (2) befestigt ist.

31. Füllelement nach einem der Ansprüche 1 bis 8 oder 13 bis 30, dadurch gekennzeichnet, daß sämtliche Funktionselemente des Füllelementes an einem Füllrohr dieses Füllelementes vorgesehen sind, und daß das Füllrohr an der Füllmaschine (2), vorzugsweise in vertikaler Richtung (A) einstellbar befestigt ist.

32. Füllelement nach einem der Ansprüche 8 bis 31, dadurch gekennzeichnet, daß der Ventilkörper (44) einen Dichtungsring (50) aufweist, der auf einem das Rohrstück (46) umschließenden ersten Abschnitt (48'') eines auf das Rohrstück (46) aufgeschraubten Ringes (48) sitzt, und zwar zwischen einem radial über den ersten Abschnitt (48'') wegstehenden zweiten, flanschartigen Abschnitt (48') des Ringes (48) und einem am Rohrstück (46) vorgesehenen, radial über den Umfang dieses Rohrstückes (46) wegstehenden Flansch (47).

## Claims

1. Filling element, for filling machines for filling a liquid filling stock into bottles (17), with a liquid valve (42, 79), which comprises a valve body (44, 80), which is movable to and fro in a filling valve axis (VA) between a setting which opens the liquid valve and one which closes it and which is provided in the proximity of a delivery opening, by way of which the liquid filling stock flows to the bottle (17) to be filled by way of its bottle opening when the liquid valve (42, 79) is open, with a probe (18, 45), which controls the liquid valve (42, 79) and which at an end projecting beyond the delivery opening in the direction of the filling element axis forms a probe portion, by which the probe (18, 45) reaches through the bottle opening into the bottle (17) respectively to be filled and by which the probe responds on reaching a predetermined filling height in the bottle to be filled in order to deliver a signal initiating the closing of the liquid valve (42, 79), with a pipe member (46, 82), which encloses the probe (18, 45) over at least a partial length and in which a channel (55) is formed, as well as with a distributor element (51), which is arranged in the liquid path of the filling element and at which the pipe member (46, 82) adjoins by its end lying remote from the probe portion and in which the channel (55) is continued, wherein a channel (59), which stands in connection by way of the distributor element (51) with the channel (55) in the pipe member (46, 82) and is connected with a gas channel (60) or with a control valve equipment (86) of the filling element, is provided in the housing (52) of the filling element (1b, 1c), characterised thereby, that the pipe member (46, 82) and the distributor element (51) are moved together with the valve body (44, 80) during the opening and closing of the liquid valve (42, 79), that the distributor element (51) displays a peripheral region, which is displaced radially outwards with respect to the filling element axis (VA) and relative to the peripheral surface of the pipe member (46, 82) and by which the distributor element (51) lies tightly and to be displaceable in the direction of the filling element axis (VA) against a countersurface formed in the housing (52) of the filling element (1b, 1c), that the distributor element (51) at the peripheral region displays a recess (57), which is open towards this peripheral region and stands in connection with the channel (55), that an opening of the channel (59) formed in the housing (52) is provided at the countersurface in the region of the recess (57) and that the probe (18, 45) is moved together with the valve body (44, 80) during the opening and closing of the liquid valve (42, 79).

2. Filling element according to claim 1, characterised thereby, that the delivery opening is formed at the lower end of a filling pipe (43) protruding beyond the underside of the filling element (1c) and that the valve body (44) is provided in the region of the lower end of the filling pipe (43), wherein the valve body (44) is situated below the delivery opening at least when the liquid valve (42) is open.

3. Filling element according to claim 1, characterised thereby, that in the case of the filling element (1c) being constructed without filling tube, the delivery opening (78) is formed at the underside of a housing (52) and that the probe (45) projects out of the delivery opening (78) beyond the underside of the filling element (1c).

4. Filling element according to claim 3, characterised thereby, that the valve body (80) is provided directly above the delivery opening (78) in a liquid channel (53), which is formed in the housing (52), for the filling stock.

5. Filling element according to claim 3 or 4, characterised thereby, that the delivery opening is an annular channel (78), which is formed around the probe (45) and open at its lower end, that the valve body (80) is provided in the region of the upper end of this annular channel (78) and that the annular channel (78), which is preferably formed to be conical at its outer surface, has an axial length which is less than the outer diameter displayed by the annular channel (78) at its lower open end.

6. Filling element according to one of the claims 1 to 5, characterised by an actuating equipment (13), which is provided for the liquid valve (42, 79), acts on the probe (45) and by way of this probe (45) actuates the valve body (44, 80) of the liquid valve (42, 79).

7. Filling element according to one of the claims 1 to 6, characterised thereby, that the probe (18, 45) is moved jointly during the opening and closing of the liquid valve (42, 79).

8. Filling element according to one of the claims 1 to 7, characterised thereby, that the valve body is arranged on the probe.

9. Filling element according to one of the claims 1 to 7, characterised thereby, that the valve body (44, 80) is arranged or formed on the pipe member (46, 82) enclosing the probe (45) over at least a partial length.

10. Filling element according to one of the claims 1 to 9, characterised thereby, that the distributor element (51), which is preferably constructed to be circularly cylindrical at its peripheral surface, is provided to be displaceable in the direction of the filling element axis (VA) in a chamber (53), which is matched to its external cross-section and formed in the housing (52) of the filling element (1b).

11. Filling element according to one of the claims 1 to 10, characterised thereby, that the probe (45), which is fastened in the distributor element (51) preferably by being screwed in, is prolonged beyond that side of the distributor element (51) which is remote from the probe portion (45') and at its end remote from the probe portion cooperates with the actuating equipment (13) for the liquid valve (42, 79).

12. Filling element according to one of the claims 1 to 11, characterised thereby, that the chamber (53), which is formed in the housing (52) of the filling element (1b, 1c), displays a portion (53'), which lies above the distributor element (51), stands in connection with a feed channel or with a stock container (67) for the liquid filling stock and displays a portion (53''), which lies underneath the distributor element (51) and stands in connection with the opened delivery opening when the liquid valve (42, 79) is open and that at least one connecting channel (62), which connects both the portions (53', 53'') of the chamber (53), is provided in the distributor element (51).

13. Filling element according to one of the claims 1 to 12, characterised thereby, that the probe (45) in the region of its end remote from the probe portion (45') is led out of a chamber (53), which is formed in a housing (52) of the filling element (1b, 1c), for the liquid filling stock through a wall, for example through a lid (68) of the housing (52), and namely with the use of a diaphragm seal (74) provided there.

14. Filling element according to one of the claims 1 to 13, characterised thereby, that the probe (45) is a conductance probe with at least one probe contact provided at the probe portion (45').

15. Filling element according to one of the claims 1 to 13, characterised thereby, that the probe (18), which by its probe portion comes into touching contact with the surface level of the filling stock (27) rising in the bottle (17) during the filling when a predetermined filling height is reached in the bottle (17) to be filled, is an optically conducting element, which displays at least one optical conductor, is coupled optically at its end remote from the probe portion to a light-emitting element (23) as well as to a light detector (24) and so constructed at its other end forming the probe portion (22) that a return, which is dependent on the optical density of the medium surrounding this probe portion (22),of the light flux, which emanates from the light-emitting element (23) and is conducted to the probe portion (22), to the light detector (24) takes place there.

16. Filling element according to claim 15, characterised thereby, that the optically conducting element of the probe (18) is formed by at least one first optical conductor (19) and at least one second optical conductor (20), of which the at least one first optical conductor (19) is coupled at an end, which is remote from the probe portion (22), to the light-emitting element (23) and the at least one second optical conductor (20) is coupled at an end, which is remote from the probe portion (22), to the light detector (24), and that the optical conductors (19, 20), which by their respective other ends form the probe portion (22), are there so arranged and shaped that a transmission, which is dependent on the optical density of the medium surrounding the probe portion (22), of the light flux conducted by way of the at least one first optical conductor (19) to the second optical conductor (20) takes place for the return of the light flux.

17. Filling element according to claim 15 or 16, characterised thereby, that the optically conducting element at its other end forming the probe portion (22) is executed in such a manner that the return or transmission takes place by total reflection when the probe portion (22) is arranged in air or a gaseous medium and such a return or transmission does not take place when there is touching contact of the probe portion (22) with the liquid filling stock (27).

18. Filling element according to claim 17, characterised thereby, that the light-emitting element and the light detector are coupled to a common optical conductor and this common optical conductor displays preferably a cone-like or conically shaped end face converging to a point at the probe portion or that the at least one first optical conductor (19) and/or the at least one second optical conductor (20) at the other end display an oblique end face (25, 26), which includes such an angle with the axis (optical conductor axis) there of the associated optical conductor (19, 20) that the transmission of the light flux conducted by way of the at least one first optical conductor (19) to the at least one second optical conductor (20) takes place by total reflection at this end face (25, 26) when the probe portion (22) is arranged in air or a gaseous medium.

19. Filling element according to claim 18, characterised thereby, that the at least one first optical conductor (19) as well as the at least one second optical conductor (20) each display the oblique end face (25, 26) at the other end and that the oblique end face of the at least one first optical conductor (19) as well as of the at least one second optical conductor (20) are arranged each relative to the other and to the respective optical conductor axis in such a manner that the transmission of the light flux conducted by way of the at least one first optical conductor (19) to the at least one second optical conductor (20) takes place by double total reflection at the oblique end faces of the optical conductors (19, 20) when the probe portion (22) is arranged in air or a gaseous medium.

20. Filling element according to claim 19, characterised thereby, that the at least one first optical conductor (19) as well as the at least one second optical conductor (20) lie one opposite the other by their oblique end faces (25, 26) at least partially in mirror symmetry on different sides of a central plane (M), which extends parallelly to the optical conductor axis of the optical conductors (19, 20) and that the oblique end faces (25, 26) of the optical conductors (19, 20) respectively lie in first and second planes (X, X'), which intersect the central plane (M) at a common axis extending transversely and perpendicularly to the respective optical conductor axis and each include an acute angle (a/2), which opens towards the underside of the filling element (1, 1a, 1b), with the central plane (M).

21. Filling element according to one of the claims 16 to 20, characterised thereby, that several first and second conductors (19, 20) are provided each time, that the optical conductors (19, 20) form several groups each displaying at least one first optical conductor (19) and at least one second optical conductor (20) and that the optical conductors (19, 20) of each group lie one opposite the other on different sides of a central plane (M), which is provided for each group, and in mirror symmetry with respect to this central plane (M).

22. Filling element according to one of the claims 16 to 20, characterised thereby, that several first and second conductors (19, 20) are provided each time, that the oblique end faces (25, 26) of at least a part of the first and second conductors (19, 20) lie one opposite the other on different sides of a common central plane (M) and in mirror symmetry with respect to this central plane (M), wherein preferably the end faces (25) arranged on one side of the central plane (M) are arranged in the first plane (X) and the end faces (26) arranged on the other side of the central plane (M) are arranged in the second plane (X').

23. Filling element according to claim 22, characterised thereby, that all first optical conductors (19) are arranged with their inclined faces (25) on the one side of the central plane (M) and all second optical conductors (20) are arranged with their end faces (26) on the other side of the central plane (M) or that first as well as also second optical conductors (19, 20) are arranged with their end faces (25, 26) on both sides of the central plane (M).

24. Filling element according to one of the claims 20 to 23, characterised thereby, that the oblique end face (25, 26) of the at least one first optical conductor (19) and/or of the at least one second optical conductor (20) includes an acute angle (a/2), preferably an angle of about 45°, which opens towards the underside of the filling element (1b), with the optical conductor axis at the probe portion (22).

25. Filling element according to one of the claims 15 to 24, characterised thereby, that the at least one optical conductor (19, 20) forming the optically conducting element is housed in a tubular sheathing, preferably in a pipe member (9), and protrudes from the sheathing or the pipe member (9) at the probe portion (22).

26. Filling element according to one of the claims 1 to 21, characterised thereby, that the filling element (1b, 1c) is so constructed in the region of the delivery opening (78) that the flow of the liquid filling stock (27), which issues from the delivery opening (78) when the liquid valve (42, 79) is open, is given a flow component acting radially outwards with respect to the filling element axis (VA).

27. Filling element according to claim 26, characterised thereby, that the filling pipe (43) displays several individual openings, which are provided in the wall of the filling pipe and distributed around the filling element axis (VA), as delivery opening or an annular delivery opening enclosing the filling element axis (VA).

28. Filling element according to one of the claims 1 to 27, characterised thereby, that an element (47, 83), which acts in the manner of an umbrella and conducts the liquid filling stock (27) out of the region of the probe portion (45', 45''), is provided above the probe portion (45', 45'').

29. Filling element according to one of the claims 1 to 28, characterised thereby, that the probe (18, 45) is connected to an electrical control equipment (30), which serves for the driving of an actuating equipment (13) for the liquid valve (42, 79) and that the control equipment (30) and the actuating equipment (13) form one assembly.

30. Filling element according to one of the claims 1 to 29, characterised thereby, that the probe (18) or its probe portion (22) is fastened at the filling machine (2) to be adjustable in vertical direction (A).

31. Filling element according to one of the claims 1 to 8 or 13 to 30, characterised thereby, that all functional elements of the filing element are provided at a filling pipe of this filling element and that the filling pipe is fastened at the filling machine (2), preferably to be adjustable in vertical direction (A).

32. Filling element according to one of the claims 8 to 31, characterised thereby, that the valve body (44) displays a sealing ring (50), which sits on a first portion (48''), which surrounds the pipe member (46), of a ring (48) screwed onto the pipe member (46), and namely between a second and flange-like portion (48'), which projects radially beyond the first portion (48''), of the ring (48) and a flange (47), which is provided at the pipe member (46) and projects radially beyond the circumference of this pipe member (46).

## Revendications

1. Elément de remplissage pour machines de remplissage destinées au remplissage de bouteilles (17) au moyen d'un produit liquide de remplissage, cet élément comportant une valve (42, 79) pour liquide, qui présente un tiroir (44, 80) de valve susceptible d'être déplacé en va-et-vient selon un axe (VA) de valve de remplissage entre une position de fermeture de valve pour liquide et une position d'ouverture de la valve pour liquide, lequel tiroir est prévu à proximité d'un orifice de délivrance par lequel, la valve (42, 79) pour liquide étant ouverte, le produit liquide de remplissage s'écoule dans la bouteille (17) à remplir par l'orifice de cette bouteille, l'élément comportant une sonde (18, 45) commandant la valve (42, 79) pour liquide, qui forme une section de sonde à une extrémité en saillie au-delà de l'orifice de délivrance dans la direction de l'axe de l'élément de remplissage, extrémité au moyen de laquelle la sonde pénètre dans la bouteille (17) qu'il s'agit, dans chaque cas, de remplir, par l'orifice de la bouteille, et au moyen de laquelle la sonde réagit lorsqu'un niveau de remplissage, déterminé à l'avance, est atteint dans la bouteille à remplir, pour délivrer un signal déclenchant la fermeture de la valve (42, 79) pour liquide ; élément comportant une pièce tubulaire (46, 82) entourant la sonde (18, 45) au moins sur une partie de sa longueur, dans laquelle est réalisé un canal (55), ainsi qu'un élément répartiteur (51) disposé dans le trajet de liquide d'un élément de remplissage, élément au-quel est raccordée la pièce tubulaire (46, 82) par son extrémité située à l'écart de la section de sonde, et dans laquelle le canal (55) se continue, un canal (59) étant prévu dans le corps (52) de l'élément de remplissage (1b, 1c), et étant en communication par l'intermédiaire de l'élément répartiteur (51) avec le canal (55) de la pièce tubulaire (46, 82), lequel canal (59) est raccordé à un canal (60) pour gaz ou à un dispositif de commande (86) de l'élément de remplissage, cet élément de remplissage étant caractérisé en ce que la pièce tubulaire (46, 82) et l'élément répartiteur (51) sont déplacés avec le tiroir (44, 80) de valve lors de l'ouverture et de la fermeture de la valve (42, 79) pour liquide ; en ce que l'élément répartiteur (51) présente une zone périphérique décalée radialement vers l'extérieur par rapport à la surface périphérique de la pièce tubulaire (46, 82) et par rapport à l'axe (VA) d'élément de remplissage, au moyen de laquelle zone périphérique l'élément répartiteur (51) est appuyé de façon étanche et en pouvant être déplacé dans la direction de l'axe (VA) d'élément de remplissage, contre une surface antagoniste formée dans le corps (52) d'élément de remplissage (1b, 1c) ; en ce que l'élément de remplissage (51) présente sur la zone périphérique une cavité (57) ouverte vers cette zone périphérique et communiquant avec le canal (55) ; en ce que, sur la surface antagoniste, une ouverture du canal (59) formé dans le corps est prévue dans la zone de la cavité (57) ; et en ce que la sonde (18, 45) est déplacée avec le tiroir (44, 80) de valve lors de l'ouverture et de la fermeture de la valve (42, 79) pour liquide.

2. Elément de remplissage selon la revendication 1, caractérisé en ce que l'orifice de délivrance est formé à l'extrémité inférieure d'un tube (43) de remplissage dépassant au-delà du côté inférieur de l'élément de remplissage (1c) et en ce que le tiroir (44) de valve est prévu dans la zone inférieure du tube (43) de remplissage, le tiroir (44) de valve se trouvant en-dessous de l'orifice de délivrance au moins lorsque la valve (42) pour liquide est ouverte.

3. Elément de remplissage selon la revendication 1, caractérisé en ce que, lorsque la structure de l'élément de remplissage (1c) ne comporte pas de tube de remplissage, l'orifice de délivrance (78) est réalisé sur le côté inférieur d'un corps (52) et en ce que la sonde (45) fait saillie à partir de l'orifice de délivrance (78) au-delà du côté inférieur de l'élément de remplissage (1c).

4. Elément de remplissage selon la revendication 3, caractérisé en ce que le tiroir (80) de valve est prévu dans un canal (53) pour liquide, canal réalisé dans le corps (52) pour acheminer le produit de remplissage, directement par l'intermédiaire de l'orifice de délivrance (78).

5. Elément de remplissage selon la revendication 3 ou 4, caractérisé en ce que l'orifice de délivrance est un canal annulaire (78) formé autour de la sonde (45), ouvert à son extrémité inférieure ; en ce que le tiroir (80) de valve est prévu dans la zone de l'extrémité supérieure de ce canal annulaire (78) et en ce que le canal annulaire (78), dont la surface extérieure est de préférence conique, a une longueur axiale qui est inférieure au diamètre extérieur que présente le canal annulaire (78) à son extrémité inférieure ouverte.

6. Elément de remplissage selon l'une des revendications 1 à 5, caractérisé en ce qu'il comporte un dispositif d'actionnement (13) prévu pour la valve (42, 79) pour liquide, qui agit sur la sonde (45) et actionne le tiroir (44, 80) de la valve (42, 79) pour liquide, par l'intermédiaire de cette sonde (45).

7. Elément de remplissage selon l'une des revendications 1 à 6, caractérisé en ce que la sonde (18, 45) est entraînée lors de l'ouverture et de la fermeture de la valve (42, 79) pour liquide, en même temps que celle-ci.

8. Elément de remplissage selon l'une des revendications 1 à 7, caractérisé en ce que le tiroir de la valve est disposé sur la sonde.

9. Elément de remplissage selon l'une des revendications 1 à 7, caractérisé en ce que le tiroir (44, 80) de la valve est disposé ou formé sur la pièce tubulaire (46, 82) entourant la sonde (45) sur au moins une partie de la longueur de celle-ci.

10. Elément de remplissage selon l'une des revendications 1 à 9, caractérisé en ce que l'on prévoit que l'élément répartiteur (51), dont la surface périphérique a de préférence une forme de cylindre, est susceptible d'être déplacé dans la direction de l'axe (VA) de l'élément de remplissage dans une chambre (53) adaptée à son diamètre extérieur et formée dans le corps (52) de l'élément de remplissage (1b).

11. Elément de remplissage selon l'une des revendications 1 à 10, caractérisé en ce que la sonde (45) fixée de préférence par vissage dans l'élément répartiteur (51) se prolonge au-delà du côté de l'élément répartiteur situé à l'opposé de la section (45') de sonde, et coopère à son extrémité située à l'opposé de la section de sonde avec le dispositif (13) destiné à actionner la valve (42, 79) pour liquide.

12. Elément de remplissage selon l'une des revendications 1 à 11, caractérisé en ce que la chambre (53) formée dans le corps (52) de l'élément de remplissage (1b, 1c) présente une section (53') située au-dessus de l'élément répartiteur (51), laquelle communique avec un canal d'alimentation ou avec un récipient de réserve (67) destiné au produit liquide de remplissage, et une section (53''), située en-dessous de l'élément répartiteur (51), et qui lorsque la valve (42, 79) pour liquide est ouverte, est en communication avec l'orifice de délivrance ouvert, et en ce que l'on prévoit dans l'élément répartiteur (51) au moins un canal de liaison (62) reliant les deux sections (53', 53'') de la chambre (53).

13. Elément de remplissage selon une des revendications 1 à 12, caractérisé en ce que, dans la zone de son extrémité située à l'opposé de sa section (45') de sonde, en sortant d'une chambre (53) destinée au produit de remplissage et formée dans un corps (52) de l'élément de remplissage (1b, 1c), la sonde (45) traverse une paroi, par exemple un couvercle (68) du corps (52) et ceci en utilisant un joint d'étanchéité du type membrane, prévu à cet endroit.

14. Elément de remplissage selon l'une des revendications 1 à 3, caractérisé en ce que la sonde (45) est une sonde de conductivité comportant au moins un contact de sonde prévu sur la section (45'') de sonde.

15. Elément de remplissage selon l'une des revendications 1 à 13, caractérisé en ce que la sonde (18) qui, après qu'un niveau de remplissage prédéterminé soit atteint dans la bouteille (17) à remplir, vient en contact, par sa section de sonde, avec la surface du produit de remplissage (27) qui monte dans la bouteille (17) lors du remplissage, est un élément conducteur optique présentant au moins un conducteur optique qui est couplé optiquement par son extrémité située à l'opposé de la section de sonde, à un élément (23) émetteur de lumière, ainsi qu'à un détecteur de lumière (24) et qui est agencé à son autre extrémité constituant la section (22) de sonde de façon telle qu'il s'y produise, en fonction de la densité optique du fluide entourant cette section (22) de sonde, un retour au détecteur (24) de lumière, d'un flux lumineux qui part de l'élément (23) émetteur de lumière et qui est amené à la section (22) de sonde.

16. Elément de remplissage selon la revendication 15, caractérisé en ce que l'élément émetteur de lumière de la sonde (18) est formé d'au moins un premier conducteur optique (19) et d'au moins un deuxième conducteur optique (20), en ce que le premier conducteur optique (19), formé d'au moins un conducteur, est couplé, à une extrémité située à l'opposé de la section (22) de sonde, à l'élément (23) émetteur de lumière et en ce que le second conducteur optique formé d'au moins un conducteur, est couplé à une extrémité située à l'opposé de la section (22) de sonde, au détecteur (24) de lumière, et en ce que les conducteurs optiques (19, 20) qui forment chacun par leur autre extrémité la section (22) de sonde, y sont disposés et conformés de façon telle que pour le retour du flux lumineux, il se produit selon la densité optique du fluide entourant la section (22) de sonde, un transfert, dans le deuxième conducteur optique (20), formé d'au moins un conducteur, du flux lumineux amené par l'intermédiaire du premier conducteur optique (19), formé d'au moins un conducteur.

17. Elément de remplissage selon la revendication 15 ou 16, caractérisé en ce que l'élément conducteur optique a, à son autre extrémité formant la section (22) de sonde, une conformation telle que, dans le cas où la section (22) est placée dans de l'air, ou dans un milieu gazeux, le retour, ou le transfert, s'effectue par réflexion totale, et que, dans le cas où la section (22) de sonde est en contact avec le produit liquide de remplissage (27) un tel retour ou un tel transfert ne s'effectue pas.

18. Elément de remplissage selon la revendication 17, caractérisé en ce que l'élément émetteur de lumière et le détecteur de lumière sont couplés à un conducteur optique commun et en ce que ce conducteur optique commun présente dans la section de sonde une surface frontale formant un point de préférence conique, ou du genre conique, ou en ce que le premier conducteur optique (19), formé d'au moins un conducteur, et/ou le second conducteur optique (20), formé d'au moins un conducteur, présentent à l'autre extrémité une surface frontale (25, 26) oblique, qui forme, avec l'axe du conducteur optique du conducteur optique considéré (19, 20) un angle tel que lorsque la section (22) de sonde est placée dans de l'air ou dans un fluide gazeux, le transfert du flux lumineux amené par le premier conducteur optique (19), formé d'au moins un conducteur, au deuxième conducteur optique (20), formé d'au moins conducteur, s'effectue par réflexion totale sur cette surface frontale (25, 26).

19. Elément de remplissage selon la revendication 18, caractérisé en ce qu'aussi bien le premier conducteur optique (19), formé d'au moins un conducteur, que le deuxième conducteur optique (20), formé d'au moins un conducteur, présentent chacun une surface frontale (25, 26) oblique et en ce que les surfaces frontales obliques, aussi bien celle du premier conducteur optique (19), formé d'au moins un conducteur, que celle du deuxième conducteur optique (20), formé d'au moins un conducteur, sont disposées l'une par rapport à l'autre et par rapport à chacun des axes de conducteur optique de façon telle que lorsque la section (22) de sonde se trouve dans de l'air ou dans un fluide gazeux, le transfert du flux lumineux (19) amené par le premier conducteur optique, formé d'au moins un conducteur, au deuxième conducteur optique, formé d'au moins un conducteur, s'effectue grâce à une double réflexion totale sur les surfaces frontales obliques de ces conducteurs optiques (19, 20).

20. Elément de remplissage selon la revendication 19, caractérisé en ce que le premier conducteur optique (19), formé d'au moins un conducteur, ainsi que le second conducteur optique (20), formé d'au moins un conducteur, se font face, au moins partiellement, symétriquement aux côtés différents d'un plan médian M qui s'étend parallèlement à l'axe du conducteur optique des conducteurs optiques (19, 20), et en ce que les surfaces obliques (25, 26) des conducteurs optiques (19, 20) sont situées dans un premier plan et respectivement dans un deuxième plan (X, X') qui intersectent le plan médian (M) sur un axe commun qui s'étend transversalement, ou perpendiculairement à l'axe du conducteur optique et qui forment chacun avec le plan médian (M) un angle aigu (a/2) ouvert en direction de l'élément de remplissage (1, 1a, 1b).

21. Elément de remplissage selon l'une des revendications 16 à 20, caractérisé en ce que plusieurs premiers conducteurs optiques et plusieurs seconds conducteurs (19, 20) optiques sont prévus, en ce que les conducteurs optiques (19, 20) forment plusieurs groupes présentant chacun au moins un premier conducteur optique (19) et au moins un second conducteur optique (20), et en ce que les surfaces frontales de chaque groupe de conducteurs optiques étant situées sur des côtés différents d'un plan médian (M) prévu pour chaque groupe, les conducteurs optiques (19, 20) de chaque groupe sont disposés symétriquement par rapport à ce plan médian (M).

22. Elément de remplissage selon l'une des revendications 6 à 20, caractérisé en ce que, dans chaque cas, plusieurs premiers et seconds conducteurs optiques (19, 20) sont prévus, en ce que les surfaces frontales obliques (25, 25) d'au moins une partie des premiers et seconds conducteurs optiques (19, 20) sont situées sur des côtés différents d'un plan médian commun (M), symétriquement par rapport à ce plan médian, les surfaces frontales disposées d'un côté du plan médian (M) étant situées dans le premier plan (X) et les surfaces frontales (26) disposées de l'autre côté du plan médian (M) étant situées dans le deuxième plan (X').

23. Elément de remplissage selon la revendication 22, caractérisé en ce que l'ensemble des premiers conducteurs optiques (19) sont disposés de façon telle que leurs surfaces obliques (25) sont situées d'un côté du plan médian (M) et que l'ensemble des seconds conducteurs optiques (20) sont disposés de façon telle que leurs surfaces obliques (26) sont situées de l'autre côté du plan médian (M), ou bien en ce qu'aussi bien des premiers conducteurs optiques (19) que des seconds conducteurs optiques (20) sont avec leurs surfaces frontales (25, 26) disposés des deux côtés du plan médian (M).

24. Elément de remplissage selon une des revendications 20 à 23, caractérisé en ce que la surface frontale oblique (25, 26) du premier conducteur optique (19), formé d'au moins un conducteur, et/ou du deuxième conducteur optique (20) forment avec l'axe de conducteur optique, sur la section (22) de sonde, un angle aigu (a/2) ouvert en direction du côté inférieur de l'élément de remplissage (16) de préférence un angle d'environ 45°.

25. Elément de remplissage selon l'une des revendications 15 à 24, caractérisé en ce que le conducteur optique (19, 20) formé d'au moins un conducteur, formant l'élément conducteur optique,est disposé dans une gaine ou enveloppe tubulaire, de préférence dans une pièce tubulaire (9), et fait saillie dans la partie (22) de sonde hors de l'enveloppe, ou pièce tubulaire, (9).

26. Elément de remplissage selon l'une des revendications 1 à 21, caractérisé en ce que l'élément de remplissage (1b, 1c) a, dans la zone de l'orifice de délivrance (78), une conformation telle qu'une composante d'écoulement agissant radialement vers l'extérieur, par rapport à l'axe (VA) de l'élément de remplissage est imposée au flux de produit liquide de remplissage (27) sortant de l'orifice de délivrance lorsque la valve (42, 79) est ouverte.

27. Elément de remplissage selon la revendication 26, caractérisé en ce que le tube de remplissage (43) présente en tant qu'orifice de délivrance plusieurs orifices individuels, qui sont répartis autour de l'axe (VA) de l'élément de remplissage dans la paroi du tube de remplissage, ou bien comporte uns orifice de délivrance annulaire entourant l'axe (VA) de l'élément de remplissage.

28. Elément de remplissage selon l'une des revendications 1 à 27, caractérisé en ce que l'on prévoit au-dessus de la section ou du tronçon de sonde (45', 45'') un élément (47, 83) agissant à la manière d'un parapluie, et qui écarte le produit liquide de remplissage (27) pour l'éloigner de la zone de la section (45', 45'') de sonde.

29. Elément de remplissage selon l'une des revendications 1 à 28, caractérisé en ce que la sonde (18, 45) est raccordée à un dispositif de commande électrique (30), qui sert à commander un dispositif (13) d'actionnement de la valve (32, 79) pour liquide, et en ce que le dispositif de commande (30) et le dispositif (13) d'actionnement forment un sous-ensemble.

30. Elément de remplissage selon l'une des revendications 1 à 29, caractérisé en ce que la sonde (18), ou sa section (22) de sonde, est fixée de façon à pouvoir être réglée ou ajustée dans le sens vertical, sur la machine (2) de remplissage.

31. Elément de remplissage selon l'une des revendications 1 à 8 ou 13 à 30, caractérisé en ce que l'ensemble des éléments fonctionnels de l'élément de remplissage sont prévus sur un tube de remplissage faisant partie de cet élément de remplissage et en ce que le tube de remplissage est fixé à la machine de remplissage (2) de préférence de façon à pouvoir être réglé dans le sens vertical (A).

32. Elément de remplissage selon l'une des revendications 8 à 31, caractérisé en ce que le tiroir (44) ou valve présente un anneau d'étanchéité (50) qui repose sur un premier tronçon (48'') entourant la pièce tubulaire (46) d'une bague (48) vissée sur la pièce tubulaire (46) et ceci entre un deuxième tronçon (48') de la bague (48), du genre d'une collerette s'écartant radialement au-delà du premier tronçon (48''), et une collerette (47) prévue sur la pièce tubulaire (46), s'étendant radialement au-delà de la périphérie de cette pièce tubulaire (46).
